Europäisches Patentamt

European Patent Office

Office européen des brevets

(11) Veröffentlichungsnummer: **0 121 733**
A2

## (12) EUROPÄISCHE PATENTANMELDUNG

(21) Anmeldenummer: 84102192.6

(22) Anmeldetag: 01.03.84

(51) Int. Cl.³: **B 29 C 25/00**

(30) Priorität: 03.03.83 DE 3307567

(43) Veröffentlichungstag der Anmeldung: 17.10.84
Patentblatt 84/42

(84) Benannte Vertragsstaaten: **BE DE FR GB IT**

(71) Anmelder: **Siemens Aktiengesellschaft, Berlin und München Wittelsbacherplatz 2, D-8000 München 2 (DE)**

(72) Erfinder: **Oestreich, Ulrich, Dipl.-Ing., Karl-Witthalm-Strasse 15, D-8000 München 70 (DE)**

(54) **Wärmeerholbarer Gegenstand.**

(57) Der wärmeerholbare Gegenstand besteht aus einer äußeren Schicht, welche formstabil, jedoch thermoplastisch verformbar ist und einer inneren, vernetzten und deshalb wärmeerholbaren Schicht. Die äußere Schicht ist aus farblosem Material hergestellt oder derart schwach eingefärbt, daß die innere Schicht im über den Kristallisationspunkt erhitzten Zustand von außen sichtbar wird. Damit kann das Erreichen ihres Erweichungspunktes von außen erkannt werden und der Zusatz eigener, das Erreichen der Erweichungstemperatur anzeigender Farbindikatoren ist überflüssig.

SIEMENS AKTIENGESELLSCHAFT          Unser Zeichen
Berlin und München                  VPA 83 P 1122 E

## Wärmeerholbarer Gegenstand

Die Erfindung betrifft einen wärmeerholbaren Gegenstand, bestehend aus einer äußeren Schicht, welche formstabil jedoch thermoplastisch verformbar ist und einer inneren vernetzten und deshalb wärmeerholbaren Schicht.

Ein Gegenstand dieser Art ist aus der DE-OS 23 44 086 bekannt. Bei derartigen schrumpffähigen Gegenständen ist es üblich, das Erreichen einer bestimmten Erweichungstemperatur durch sogenannte Farbindikatoren anzuzeigen. Diese Farbindikatoren (Thermofarben) ergeben bei einer bestimmten Temperatur (z.B. 130°) einen Farbumschlag, welcher dem Anwender signalisiert, daß die notwendige Temperatur für die Rückschrumpfung erreicht worden ist. Die Hinzufügung derartiger Farbindikatoren erfordert jedoch einen zusätzlichen Aufwand und es ist auch nicht immer ohne weiteres möglich, genau passende Indikatoren zu entsprechenden Temperaturwerten in entsprechend feiner Abstufung zu finden. Weiterhin ist nachteilig, daß die Farbindikatoren nur die Oberflächentemperatur anzeigen, die - besonders bei dickeren oder mehrschichtigen Anordnungen - erhebliche Abweichungen gegenüber einer Temperatur im Innenbereich aufweisen kann.

Der vorliegenden Erfindung liegt die Aufgabe zugrunde, einen Weg aufzuzeigen, auf dem es möglich ist, dem Anwender das Erreichen der gewünschten Erweichungstemperatur in einfacher Weise und ohne zusätzlichen Aufwand

Jb 1 Kom / 01.03.1983

0121733

anzuzeigen. Gemäß der Erfindung wird dies bei einem wärmeerholbaren Gegenstand der eingangs genannten Art dadurch erreicht, daß die äußere Schicht so gewählt ist, daß sie erst ab Erreichen der Rückverformungstemperaur der inneren Schicht derart transparent wird, daß im genannten Zustand die innere Schicht von außen sichtbar wird.

Dadurch daß die äußere Schicht so ausgewählt wird, daß sie bei der Rückstelltemperatur für die Bedienungsperson durchsichtig wird, ist es in einfacher Weise möglich, die Gleichmäßigkeit der Erwärmung zu kontrollieren, was sonst sehr schwierig ist, da einmal umgeschlagene Thermofarben meist nicht reversibel sind. Es ist also lediglich durch die Auswahl einer geeigneten äußeren, d.h. farblosen, bei Dekristallisation ausreichend durchsichtig werdenden Schicht möglich, das sicher gleichmäßige Erreichen der gewünschten Grenztemperatur festzustellen. Zusätzliche Farbindikatoren sind somit nicht notwendig und es entfällt damit auch der Nachteil, daß bei den üblichen Farbindikatoren ja nur die Temperatur auf der Oberfläche des wärmeerholbaren Gegenstandes gemessen und bestimmt wird, während die Größe der inneren Temperatur(wegen des Temperaturgefälles von der Außenwand zur Innenwand) unberücksichtigt bleibt und Thermofarben meist nicht reversibel sind. Bei der Erfindung dagegen wird dem Anwender genau signalisiert, ob und wann der jeweils vorgesehene Erweichungspunkt tatsächlich und gleichmäßig genug erreicht worden ist.

Bevorzugt ist die äußere Schicht bei Normaltemperautr opak, so daß die innere Schicht vor Erreichen des Dekristallisationspunktes nicht oder nicht klar sichtbar wird. Erst nach entsprechender Erwärmung wird die äußere Schicht ausreichend durchsichtig. Z.B. sind HDPE oder PP (ohne nennenswerte Farbzusätze) bei Normaltemperaturen stark opak und nicht transparent, da unregelmäßig kristallisiert. Bei Erreichen der Dekristallisation (und damit der Rückstelltemperatur der inneren Schicht) wird die äußere Schicht transparent, damit das Ganze z.B. dunkel, wenn die innere Schicht schwarz eingefärbt ist.

Die äußere Schicht besteht somit zweckmäßig aus einem hochverdichteten Polyäthylen (HDPE) oder Polypropylen (PP). Für die innere Schicht ist ein entsprechend vernetztes Material vorgesehen, wobei insbesondere hierfür geeignet ist niederverdichtetes Polyäthylen (LDPE) oder ein anderes vernetztes Polymer, das auch kautschukartig sein kann, z.B. EPR oder EPPM.

Die Erfindung wird nachfolgend anhand von Zeichnungen näher erläutert, bei denen im Querschnitt der Aufbau eines wärmeerholbaren Gegenstandes dargestellt ist.

Fig. 1 zeigt den Aufbau vor dem Rückschrumpfen und

Fig. 2 nach dem Rückschrumpfen.

Es kann sich dabei beispielsweise um einen Schrumpfschlauch für elektrische Bauteile oder eine aufschrumpfbare Kabelmuffe oder dergleichen handeln. Die Außenschicht AS des wärmeerholbaren Gegenstandes ist formstabil, jedoch thermoplastisch verformbar aufgebaut. Das hierfür verwendete Material ist so ausgewählt, daß es unterhalb der Rückschrumpftemperatur der inneren Schicht IS undurchsichtig ist (z.B. opak). Bei Erwärmung wird es durchsichtig und zwar vorteilhaft infolge Dekristallisation. Die Temperatur, bei der die äußere Schicht AS durchsichtig wird (Dekristallisationstemperatur) liegt bei oder etwas oberhalb (wegen eines etwaigen Temperaturgefälles) der Rückschrumpftemperatur der inneren Schicht IS. Damit ist die Einfärmung (z.B.

schwarz) der inneren Schicht plötzlich sichtbar und damit wird der Bedienungsperson der Beginn des Rückschrumpfprozesses der inneren Schicht angezeigt. Der Beginn der Transparenz ist also ein scharfes Indikations-Merkmal. Neben im erwärmten Zustand durchsichtigen Materialien können auch schwach eingefärbte Stoffe für die Außenschicht AS verwendet werden.

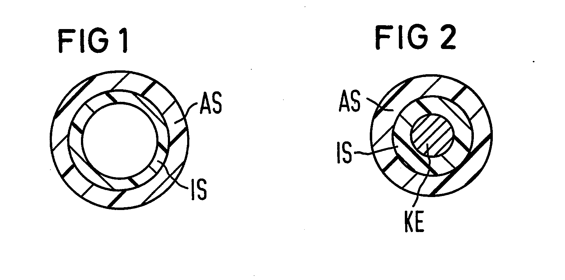

Figur 2 zeigt die gleiche Anordnung im Querschnitt, wobei der wärmeerholbare Gegenstand auf einen Kern KE aufgeschrumpft ist. Hierzu wird dem wärmeerholbaren Gegenstand von außen eine entsprechende Wärmemenge zugeführt, bis die äußere und die innere Schicht IS anfangen zu erweichen und damit in ihre ursprüngliche Position zurückschrumpfen. Da die äußere Schicht AS bei Erreichen der Rückschrumpftemperatur durchsichtig wird, kann bei der Wärmezufuhr die Bedienungsperson das gleichmäßige Erreichen des Erweichungspunktes der inneren Schicht IS von außen her erkennen und die Wärmezufuhr so korrigieren, daß an keiner Stelle eine Überhitzung stattfindet. Die innere Schicht IS ist zweckmäßig aus Lichtschutzgründen schwarz oder dunkel eingefärbt, kann aber auch jede dem Zweck angemessene Farbe haben. Der äußeren Schicht AS kann vorteilhaft auch ein Lichtschutzmittel zugesetzt werden, das so auszuwählen ist, daß es die Durchsichtigkeit nicht beeinträchtigt (z.B. UV-Stabilatoren). In diesem Fall wäre die innere Schicht IS lichtgeschützt (was bei Schwarzfärbung ohnehin bereits der Fall ist.) Innenschicht IS und Außenschicht AS weisen keine Farbindikationen auf. Polypropylen (PP) wird bei etwa 160°C transparent, HDPE bei etwa 126°C. Da die Rückschrumpftemperatur etwa im Bereich von um 130°C liegt (bei LDPE) kann durch einen dieser Stoffe oder durch eine entsprechende Mischung die gewünschte Farbanzeige über das Durchsichtigmachen der Außenschicht AS erreicht werden.

8 Patentansprüche

2 Figuren

0121733

Patentansprüche

1. Wärmeerholbarer Gegenstand bestehend aus einer äußeren Schicht (AS), welche formstabil jedoch thermoplastisch verformbar ist und einer inneren vernetzten und deshalb wärmeerholbaren Schicht (IS), d a d u r c h   g e k e n n z e i c h n e t , daß die äußere Schicht (AS) so gewählt ist, daß sie erst ab Erreichen der Rückverformungstemperatur der inneren Schicht (IS) derart transparent wird, daß im genannten Zustand die innere Schicht (IS) von außen sichtbar wird.

2. Wärmeerholbarer Gegenstand nach Anspruch 1, d a d u r c h   g e k e n n z e i c h n e t , daß die äußere Schicht (AS) aus hochverdichtetem Polyäthylen (HDPE) besteht.

3. Wärmeerholbarer Gegenstand nach Anspruch 1, d a d u r c h   g e k e n n z e i c h n e t , daß die äußere Schicht (AS) aus Polypropylen (PP) besteht.

4. Wärmeerholbarer Gegenstand nach Anspruch 2 und 3, d a d u r c h   g e k e n n z e i c h n e t , daß die äußere Schicht (AS) aus einer Mischung von Polyäthylen und Polypropylen besteht.

5. Wärmeerholbarer Gegenstand nach einem der vorhergehenden Ansprüche, d a d u r c h   g e k e n n z e i c h n e t , daß die innere Schicht (IS) aus Polyäthylen geringerer Dichte (LDPE) besteht.

0121733

6. Wärmeerholbarer Gegenstand nach einem der Ansprüche 1 bis 4, d a d u r c h  g e k e n n z e i c h - n e t ,  daß die innere Schicht (IS) aus EPR oder EPDM besteht.

7. Wärmeerholbarer Gegenstand nach einem der vorhergehenden Ansprüche, d a d u r c h  g e k e n n - z e i c h n e t ,  daß der äußeren Schicht (AS) ein Lichtschutzmittel zugesetzt ist.

8. Wärmeerholbarer Gegenstand nach einem der vorhergehenden Ansprüche, d a d u r c h  g e k e n n - z e i c h n e t ,  daß die innere Schicht (IS) eingefärbt ist, vorzugsweise schwarz.

**FIG 1**

**FIG 2**